# EUROPÄISCHE PATENTANMELDUNG

(11) **EP 0 935 925 A1**
(43) Veröffentlichungstag der Anmeldung: **18.08.1999**
(21) Anmeldenummer: 97810847.0
(22) Anmeldetag: 11.11.1997
(51) Int. Cl.: A23G 1/00

(54) **Verfahren zur Herstellung von Schokolademasse und Schokolademasse mit vermindertem Fremdstoffanteil**

(71) Anmelder: HALBA AG, 8304 Wallisellen (CH)
(72) Erfinder: Mikle, Heinz, 8627 Grüningen (CH)
(74) Vertreter: Ritscher, Thomas, Dr.

(57) **Zusammenfassung**

Für Schokolademassen, die im wesentlichen aus Kakaobestandteilen, Zucker, gegebenenfalls Milchpulver und Emulgator bestehen, wird zur Verminderung des Fremdstoffanteils als Emulgator anstelle des üblichen Soja-Isolates ein Milch-Isolat verwendet, das mindestens teilweise aus Phospholipiden besteht.

## Beschreibung

Schokolade wird allgemein aus Kakaokernen, Kakaomasse oder Kakaopulver, Kakaobutter sowie Saccharose hergestellt und enthält in der Regel mindestens etwa 30% Kakaotrockenmasse sowie mindestens je etwa 10% entölte Kakaotrockenmasse und Kakaobutter und, entsprechend dem Schokoladetyp, gegebenenfalls auch Milch, meist in Form von Milchpulver.

Ein Zusatz von Emulgator ist lebensmittelrechtlich praktisch überall zulässig und üblich. Als Emulgator wird vorwiegend ein Phospholipide enthaltendes Isolat aus Sojabohnen (sogenanntes Soja-Lecithin) verwendet, das als solches keine stoffliche Beziehung zu den anderen Schokoladebestandteilen hat uns als deklarationspflichtiger Zusatzstoff, d.h. insoweit als Fremdstoff anzusehen ist. Dabei unterscheidet sich die in der vorliegenden Beschreibung verwendete Bezeichnung "Fremdstoff" von der im Lebensmittelrecht verwendeten gleichlautenden Bezeichnung und soll ausdrücken, dass ein Zusatz verwendet wird, der eine so enge Beziehung zu einer der Hauptkomponenten hat, dass er keiner besonderen Deklaration bedarf.

An sich könnte man normalerweise auf die Verwendung von Emulgator überhaupt verzichten, wenn statt dessen der Kakobutteranteil ausreichend erhöht wird, doch ist dies weder aus kommerziellen noch diätetischen Gesichtspunkten befriedigend.

Aufgabe der Erfindung ist es, eine Schokolade zu bieten, die trotz eines Gehalts an Emulgator einen verminderten Anteil solcher deklarationspflichtiger Zusatzstoffe, d.h. Fremdstoffe, wie Soja-Isolat, enthält, also Komponenten, die keine stoffliche Beziehung zu den Hauptkomponenten üblicher Schokoladen haben.

Dieses Ziel wird erfindungsgemäss durch das in Anspruch 1 umschriebene Verfahren erreicht.

Es wurde gefunden, dass ein mindestens teilweise und vorzugsweise überwiegend aus Phospholipiden bestehendes Isolat aus Milch, insbesondere Kuhmilch, eine vergleichbare Wirkung als Emulgator für Schokolade hat, wie die üblichen Isolate aus Sojabohnen, und dass sich ein Milch-Isolat, das Phospholipide, insbesondere Glycerophospholipide, enthält, als Emulgator für die Herstellung von Schokolade eignet. Als "Isolat" wird hier eine Komponente verstanden, die aus einem gegebenen Material, wie Milch, isoliert werden kann, d.h. in dem Material normalerweise enthalten ist und aus diesem durch Isolationsverfahren gewonnen werden kann.

Allgemein wird Schokolade dadurch hergestellt, dass man Kakaomasse, Kristallzucker und Kakaobutter sowie gegebenenfalls Trockenmilcherzeugnisse unter Wärmezufuhr zerkleinert und anschliessend in mehrstufigen Walzwerken walzt. Die bei ca. 30 °C trockene und pulverförmige, gewalzte Schokolade wird in der Wärme, typisch bei 40-90°C behandelt, so dass eine fliessfähige Schokolademasse entsteht. Anschliessend wird die Masse zur Einleitung der Kristallisation bei ca. 30°C temperiert, in vorgewärmte Formen, z.B. Tafelformen, gefüllt und bei etwa 10°C entformt. Der Emulgator wird meist vorgängig in einem Teil der Kakaobutter gelöst und in dieser Form in die Schokolademasse eingearbeitet.

Eine allgemeine Ausführungsform des erfindungsgemässen Verfahrens besteht nun darin, dass man in einem solchen Verfahren ein Phospholipide enthaltendes Milch-Isolat als Emulgator einsetzt.

Geeignete Milch-Isolate bestehen mindestens teilweise und vorzugsweise überwiegend aus Phospholipiden der Formel 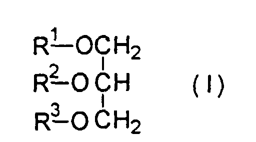 in der R¹, R² und R³ Säurereste mit der Massgabe sind, dass mindestens zwei der Säurereste solche von gesättigten und/oder ungesättigten Fettsäuren sind und der Formel Alk-CO- entsprechen, in der "Alk" der einwertige Rest eines gesättigten oder ungesättigten Kohlenwasserstoffs mit 7 - 23, insbesondere 15 oder 17 Kohlenstoffatomen in der Kette ist; vorzugsweise bedeutet "Alk" einen unverzweigten aliphatischen Rest mit 15 oder 17 Kohlenstoffatomen und gegebenenfalls Doppelbindungen; der dritte Säurerest ist ein Phosphatrest der Formel 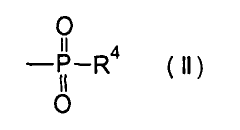 in der R⁴ typischerweise den Rest einer über ein vorzugsweise β-ständiges Kohlenstoffatom gebundenen α-Aminosäure, z.B. von Cholin oder Ethanolamin oder Serin, einen Monosaccharidrest, z.B. den Inosit- oder Galactoserest, oder einen Glycerinrest darstellt.

Spezielle Beispiele für Verbindungen der Formel I sind Phosphatidylcholin, Phosphatidylethanolamin, Phosphatidylserin, Phosphatidylglycerin und Phosphatidylinosit.

Phospholipide enthaltende Milch-Isolate können ausser Phospholipiden der Formel I auch Cephaline und/oder Spingymyeline enthalten. Eine abschliessende Aufzählung der in für die Erfindung geeigneten Milch-Isolaten vorkommenden Phospholipide ist nicht beabsichtigt und für die Erfindung auch nicht erforderlich, da es mehr auf die emulgierende Wirkung eines Milch-Isolates als auf seine chemische Zusammensetzung ankommt.

Nötigenfalls kann dies eine Fachperson anhand weniger einfacher Versuche ermitteln, z.B. mit einem Testsystem aus Kakaobutter und Zucker mit einer Teilchengrösse, die typisch im Bereich von 18-25 µm liegt, und Prüfung der emulgierenden Wirkung des fraglichen Milch-Isolates anhand der Zeitspanne, innert der sich eine durch Mischen unter definierten Bedingungen hergestellte Dispersion einer vergleichenden Viskositätsbestimmung unterzieht. Ein anderer einfacher Test beruht auf der Messung der Kakaobuttermenge, die von einer gegebenen Mischung jeweils ohne und mit dem zu prüfenden Milch-Isolat aufgenommen wird. Das Ausmass der Aufnahmefähigkeit wird anhand der Verminderung der Viskosität beurteilt.

Das Milch-Isolat wird erfindungsgemäss meist in Anteilen von 0.1 bis 5%, bezogen auf das Gewicht der gesamten Schokolade, verwendet. Der jeweils optimale Anteil an Milch-Isolat kann in analoger Weise bestimmt werden wie die Emulsionskraft des Milch-Isolates und liegt typisch im Bereich von 0.2 - 1% des Gewichts der Schokoladezusammensetzung.

Wenn die Emulsionskraft eines gegebenen Milch-Isolates im gewünschten Anteilsbereich für die beabsichtigte Herstellung nicht ausreicht, kann ein lebensmittelrechtlich zulässiger Hilfsemulgator verwendet werden, z.B. Ammoniumsalz von Phosphatidsäuren, Ei-Lecithin und dergleichen, jedoch vorzugsweise kein Soja-Isolat.

Phospholipide enthaltende Milch-Isolate können nach verschiedenen, an sich bekannten Methoden, meist aus Magermilchpulver, erhalten werden, z.B. durch Extraktion mit selektivem Lösungsmittel, durch Hochdruckextraktion mit Kohlendioxid, durch Umkehrosmose oder durch andere Verfahren zur Isolation von Lipiden aus Kohlehydraten und Proteinen. Die Isolation durch Hochdruckextraktion mit flüssigem, d.h. unterkritischem Kohlendioxid ist ein für die Erfindung bevorzugtes Gewinnungsverfahren für Milch-Isolate mit Emulgierwirkung.

Als Schokolademassen im Sinn der vorliegenden Erfindung gelten Schokolade, z.B. Tafelschokolade, Couverturen und andere, Kakaopulver enthaltende Zubereitungen, wie Fettglasur, Pralinenmassen und weitere Zubereitungen, die mindestens eine Komponente von Kakaobohnen enthalten und üblicherweise mit Hilfe von Emulgatoren verarbeitet werden. Diese Definition unterscheidet sich von der im Lebensmittelrecht üblichen Terminologie.

Erfindungsgemäss ist auch eine Schokolade bzw. Schokolademasse, die mindestens zum überwiegenden Teil im wesentlichen aus Kakaobestandteilen, Zucker und gegebenenfalls Milchpulver besteht und mindestens einen Emulgator enthält, welche Schokolade erfindungsgemäss dadurch gekennzeichnet ist, dass sie zur Verminderung der Fremdstoffanteile als Emulgator ein Milch-Isolat enthält, das mindestens teilweise aus Phospholipiden der oben beschriebenen Art besteht.

Erfindungsgemäss ist schliesslich auch die Verwendung von Milch-Isolaten, die mindestens teilweise aus Phospholipiden bestehen, als Emulgatoren für Schokolademassen.

Wie in der einschlägigen Fachwelt üblich, kann der Kakaobutteranteil in manchen Schokolademassen im Sinne der eingangs gegebenen Definition teilweise oder vollständig durch andere lebensmittelrechtlich zulässige vegetabilische Öle oder Fette ersetzt werden.

Die Erfindung wird anhand der folgenden, nicht beschränkenden Beispiele weiter erläutert.

### Beispiele

In den nachfolgenden Beispielen wurde ein pulverförmiges Milch-Isolat verwendet, das einen Proteingehalt von etwa 60% (berechnet als Milcheiweiss) und einen Lipidgehalt von mindestens etwa 25% (berechnet als Triglyzeride) hatte. 500 Gewichtsteile dieses Milch-Isolates wurden ja nach Rezeptur mit 500 Gewichtsteilen Kakaobutter oder 500 Gewichtsteilen Pflanzenöl verarbeitet (nachfolgend als 1:1-Mischung bezeichnet).

Zur Prüfung der Homogenität wurde die zu prüfende Suspension bzw. Masse mittels Partikel-Lasermesstechnik untersucht. Sind keine Agglomerate > 200 µm vorhanden, so sind die Feststoffteile homogen und in genügend feiner Form im pflanzlichen Fett/Öl verteilt. Die zeitliche Stabilität dieser Verteilung indiziert eine ausreichende Emulgationswirkung des verwendeten Milch-Isolates.

### Beispiel 1

Zur Herstellung einer Milchschokolade wurde folgende Rezeptur verwendet:
- 90.000 Gew.-Teile: Kakaomasse Westafrika
- 136.000 Gew.-Teile: Vollmilchpulver walzengetrocknet 26%
- 29.000 Gew.-Teile: Magermilchpulver sprühgetrocknet
- 180.000 Gew.-Teile: Kakaobutter desodoriert
- 531.000 Gew.-Teile: Kristallzucker
- 30.000 Gew.-Teile: Haselnussmasse
- 0.300 Gew.-Teile: Kochsalz
- 0.150 Gew.-Teile: Vanilin krist.
- 5.000 Gew.-Teile: (1:1)-Milch-Isolat/Kakaobutter

Die Masse wurde in üblicher Weise verarbeitet und geprüft.

### Beispiel 2

Zur Herstellung einer Pralinéfüllung wurde folgende Rezeptur verwendet:
- 64.000 Gew.-Teile: Mandeln braun
- 60.000 Gew.-Teile: Haselnüsse
- 181.000 Gew.-Teile: Kristallzucker
- 156.400 Gew.-Teile: Pflanzenfett
- 15.000 Gew.-Teile: Couvertüre
- 0.200 Gew.-Teile: Kochsalz
- 2.500 Gew.-Teile: (1:1)-Milch-Isolat/Kakaobutter

Diese Mischung wurde in üblicher Weise verarbeitet und geprüft.

### Beispiel 3

Zur Herstellung einer Fettglasurmasse wurde folgende Rezeptur verwendet:
- 94.500 Gew.-Teile: Kristallzucker
- 338.00 Gew.-Teile: Pflanzenfett
- 50.000 Gew.-Teile: Kakaopulver teilentölt
- 15.000 Gew.-Teile: Magermilchpulver sprühgetrocknet
- 2.430 Gew.-Teile: (1:1)-Milch-Isolat/Erdnussöl

Die Mischung wurde in üblicher Weise verarbeitet und geprüft.

### Beispiel 4

Zur Herstellung einer weissen Schokolade wurde folgende Rezeptur verwendet:
- 230.000 Gew.-Teile: Vollmilchpulver walzengetrocknet 26%
- 65.000 Gew.-Teile: Magermilchpulver sprühgetrocknet
- 280.000 Gew.-Teile: Kakaobutter desodoriert
- 420.000 Gew.-Teile: Kristallzucker
- 0.150 Gew.-Teile: Vanillin krist.
- 5.000 Gew.-Teile: (1:1)-Milch-Isolat/Kakaobutter

Die Masse wurde wie in Beispiel 1 verarbeitet und geprüft.

### Beispiel 5

Zur Herstellung von Bitterschokolade wurde folgende Rezeptur verwendet:
- 400.000 Gew.-Teile: Kakaomasse Westafrika
- 100.000 Gew.-Teile: Kakaobutter desodoriert
- 495.000 Gew.-Teile: Kristallzucker
- 0.150 Gew.-Teile: Vanilin krist.
- 5.000 Gew.-Teile: (1:1)-Milch-Isolat/Kakaobutter

Die Masse wurde wie in Beispiel 1 verarbeitet und geprüft.

## Patentansprüche

1. Verfahren zur Herstellung einer Schokolade aus Kakakobestandteilen, Zucker, gegebenenfalls Milchpulver und Emulgator, dadurch gekennzeichnet dass zur Herstellung einer Schokolade mit vermindertem Fremdstoffanteil als Emulgator ein Milch-Isolat verwendet wird.

2. Verfahren nach Anspruch 1, dadurch gekennzeichnet, dass das Milch-Isolat in Kakaobutter gelöst und in dieser Form der Schokolade zugesetzt wird.

3. Verfahren nach Anspruch 1 oder 2, dadurch gekennzeichnet, dass das Milch-Isolat mindestens teilweise aus Phospolipiden besteht.

4. Verfahren nach einem der Ansprüche 1 - 3, dadurch gekennzeichnet, dass das als Emulgator verwendete Milch-Isolat mindestens teilweise aus Phospholipiden der Formel (I) 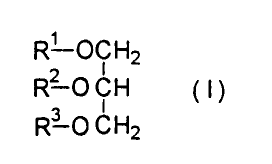 besteht, in der R¹, R² und R³ Säurereste mit der Massgabe sind, dass mindestens zwei der Säurereste solche von gesättigten und/oder ungesättigten Fettsäuren sind und der Formel Alk-CO- entsprechen, in der "Alk" der einwertige Rest eines gesättigten oder ungesättigten Fettkkohlewasserstoffs mit 7 - 23, insbesondere 15 - 17 Kohlenstoffatomen in der Kette ist, die Doppelbindungen enthalten kann, wobei der dritte Säurerest ein Phosphatrest der Formel 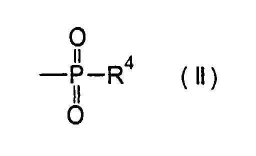 ist, in der R⁴ den Rest einer über ein vorzugsweise β-ständiges Kohlenstoffatom gebundenen α-Aminosäure, z.B. Cholin, Ethanolamin oder Serin, bedeutet oder ein Monosaccharidrest, z.B. der Inosit- oder Galactoserest, oder ein Glycerinrest ist.

5. Schokolade, die mindestens zum überwiegenden Teil aus Kakakobestandteilen, Zucker, gegebenenfalls Milchpulver, und aus Emulgator besteht, dadurch gekennzeichnet, dass die Schokolade zur Verminderung der Fremdstoffanteile als Emulgator ein Milch-Isolat enthält.

6. Schokolade nach Anspruch 5, dadurch gekennzeichnet, dass das Milch-Isolat mindestens teilweise aus Phospholipiden besteht.

7. Schokolade nach einem der Ansprüche 5 oder 6, dadurch gekennzeichnet, dass das als Emulgator verwendete Milch-Isolat mindestens teilweise aus Phospholipiden der Formel (I) 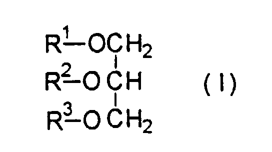 besteht, in der R¹, R² und R³ Säurereste mit der Massgabe sind, dass mindestens zwei der Säurereste solche von gesättigten und/oder ungesättigten Fettsäuren sind und der Formel Alk-CO- entsprechen, in der "Alk" der einwertige Rest eines gesättigten oder ungesättigten Fettkohlenwasserstoffs mit 7 - 23, insbesondere 15 - 17 Kohlenstoffatomen in der Kette ist, die Doppelbindungen enthalten kann, wobei der dritte Säurerest ein Phosphatrest der Formel 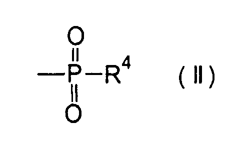 ist, in der R⁴ den Rest einer über ein vorzugsweise β-ständiges Kohlenstoffatom gebundenen α-Aminosäure, z.B. Cholin, Ethanolamin oder Serin, bedeutet oder ein Monosaccharidrest, z.B. der Inosit- oder Galactoserest, oder ein Glycerinrest ist.

8. Verwendung von Milch-Isolaten, die mindestens teilweise aus Phospholipiden bestehen, als Emulgatoren für Schokolade.

9. Verwendung nach Anspruch 8, dadurch gekennzeichnet, dass die Phospholipide mindestens teilweise solche der Formel (I) 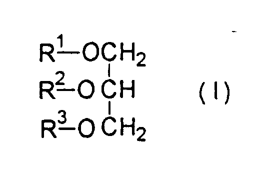 sind, in der R¹, R² und R³ Säurereste mit der Massgabe sind, dass mindestens zwei der Säurereste solche von gesättigten und/oder ungesättigten Fettsäuren sind und der Formel Alk-CO- entsprechen, in der "Alk" der einwertige Rest eines gesättigten oder ungesättigten Fettkohlenwasserstoffs mit 7 - 23, insbesondere 15 - 17 Kohlenstoffatomen in der Kette ist, die Doppelbindungen enthalten kann, wobei der dritte Säurerest ein Phosphatrest der Formel 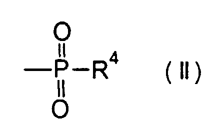 ist, in der R⁴ den Rest einer über ein vorzugsweise β-ständiges Kohlenstoffatom gebundenen α-Aminosäure, z.B. Cholin, Ethanolamin oder Serin, bedeutet oder ein Monosaccharidrest, z.B. der Inosit- oder Galactoserest, oder ein Glycerinrest ist.
